# EUROPEAN PATENT APPLICATION

(11) **EP 4 279 283 A1**
(43) Date of publication of application: **22.11.2023**
(21) Application number: 23173108.4
(22) Date of filing: 12.05.2023
(51) Int. Cl.: B41M 3/16, B41M 7/00, D06N 7/00

(54) **FOAMING PROMOTION LIQUID, MANUFACTURING METHOD FOR MANUFACTURING RECORDED PRODUCT HAVING THREE-DIMENSIONAL IMAGE, AND MANUFACTURING APPARATUS FOR MANUFACTURING RECORDED PRODUCT HAVING THREE-DIMENSIONAL IMAGE**

(30) Priority: 17.05.2022 JP 2022080679; 17.05.2022 JP 2022080678; 20.04.2023 JP 2023069416
(71) Applicant: CANON KABUSHIKI KAISHA, Tokyo 146-8501 (JP)
(72) Inventor: HERLAMBANG, Olivia, Tokyo (JP); TANAKA, Takatoshi, Tokyo (JP); OMAGARI, Toshihiro, Tokyo (JP); NOGUCHI, Tetsuro, Tokyo (JP); NAGASE, Yoshiyuki, Tokyo (JP)
(74) Representative: WESER & Kollegen Patentanwälte PartmbB

(57) **Abstract**

A manufacturing method for manufacturing a recorded product having a three-dimensional image, the manufacturing method including applying a foaming promotion liquid to a recording medium having a base material and a foaming layer provided on the base material and containing a foaming particle having a shell layer including polyacrylonitrile copolymer, and heating the recording medium to which the foaming promotion liquid is applied. The foaming promotion liquid includes a good solvent for the polyacrylonitrile copolymer and a poor solvent for the polyacrylonitrile copolymer.

## Description

### BACKGROUND OF THE INVENTION

### Field of the Invention

The present invention relates to a foaming promotion liquid, a manufacturing method for manufacturing a recorded product having a three-dimensional image, and a manufacturing apparatus for manufacturing a recorded product having a three-dimensional image.

### Description of the Related Art

In recent years, in the printing industry, with the progress of digitalization, not only a two-dimensional image but also a three-dimensional image representing a recess and a protrusion needs to be digitalized.

The publication of Japanese Patent Application Laid-Open No. 2012-171317 discusses a method for forming a three-dimensional image having a recess and a protrusion by applying a photothermal conversion material such as black ink onto a recording medium having a foaming layer containing a foaming particle, and emitting light to the recording medium, thereby causing a portion to which the black ink is applied to selectively foam and expand over a portion to which the black ink is not applied. The black ink applied to form the protruding portion, however, may influence the visual quality of the image. Thus, particularly in a case where a color image is printed, it is necessary to process a portion to which the black ink is applied, and this causes trouble.

In response to this, the publication of Japanese Patent Application Laid-Open No. 10-129116 and the publication of Japanese Patent Application Laid-Open No. 11-11018 discuss methods for forming a three-dimensional image by applying, onto a three-dimensional image formation layer containing a foaming capsule and provided in a recording target material for forming a three-dimensional image, a plasticizer for a shell wall resin of the foaming capsule and then heating the recording target material, thereby selectively promoting the foaming property of a portion to which the plasticizer is applied over the foaming property of a portion to which the plasticizer is not applied.

The publication of Japanese Patent Application Laid-Open No. 2020-50719 discusses a method for forming a three-dimensional image by applying, onto a medium including a foaming layer containing a microcapsule foaming particle, a liquid containing a material that swells or dissolves the microcapsule, and heating the medium, thereby selectively reducing the foaming property of a portion to which the liquid is applied over a portion to which the liquid is not applied.

### SUMMARY OF THE INVENTION

An aspect of the present disclosure is directed to providing a foaming promotion liquid, a manufacturing method for manufacturing a recorded product having a three-dimensional image, and a manufacturing apparatus for manufacturing a recorded product having a three-dimensional image that are capable of forming a three-dimensional image having a sufficient foaming height even in a case where the heating temperature at which a recording medium having a foaming layer is heated is low.

According to a first aspect of the present disclosure, there is provided a foaming promotion liquid as specified in clams 1 to 9.. According to a second aspect of the present disclosure, there is provided a manufacturing method as specified in claims 10 to 12. According to a third aspect of the present disclosure, there is provided a manufacturing apparatus as a specified in claims 13 to 15.

Further features of the present disclosure will become apparent from the following description of exemplary embodiments with reference to the attached drawings.

### BRIEF DESCRIPTION OF THE DRAWINGS

Fig. 1 is a cross-sectional view schematically illustrating an example of a recording medium used in a manufacturing method for manufacturing a recorded product having a three-dimensional image.
Fig. 2 is a schematic diagram illustrating a general configuration of a manufacturing apparatus for manufacturing a recorded product having a three-dimensional image.
Figs. 3A, 3B, and 3C are diagrams illustrating specific examples of placement order of a foaming promotion liquid application device, a heating device, and an ink application device in the manufacturing apparatus for manufacturing a recorded product having a three-dimensional image.

### DESCRIPTION OF THE EMBODIMENTS

The present disclosure will be described in further detail below taking exemplary embodiments as examples. Hereinafter, inkjet aqueous ink will occasionally be referred to simply as "ink". A foaming promotion liquid for forming a three-dimensional image will occasionally be referred to simply as "a foaming promotion liquid". A manufacturing method for manufacturing a recorded product having a three-dimensional image will occasionally be referred to simply as "a manufacturing method for manufacturing a recorded product". A manufacturing apparatus for manufacturing a recorded product having a three-dimensional image will occasionally be referred to simply as "a manufacturing apparatus for manufacturing a recorded product". A good solvent for the polyacrylonitrile copolymer will occasionally be referred to simply as "a good solvent". A poor solvent for the polyacrylonitrile copolymer will occasionally be referred to simply as "a poor solvent". Physical property values are values at normal temperature (25°C), unless otherwise noted.

In view of energy saving and safety, in a heating step for foaming, the heating temperature needs to be lowered.

According to the consideration of the present inventors, however, in the methods discussed in the publication of Japanese Patent Application Laid-Open No. 10-129116 and the publication of Japanese Patent Application Laid-Open No. 11-11018, if the heating temperature of the foaming is lowered, the foaming may be insufficient, and it may be difficult to make a protruding portion of the three-dimensional image sufficiently high. Moreover, a liquid containing the plasticizer may decrease the binding force of a binder resin contained in the three-dimensional image formation layer of the recording target material, and a foaming layer may be likely to peel off a base material.

In the method discussed in the publication of Japanese Patent Application Laid-Open No. 2020-50719, to cause the portion to which the liquid for reducing foaming is not applied to foam, it is necessary to heat the portion at a temperature higher than that at which the foaming particle starts foaming.

Thus, the present inventors have diligently considered a manufacturing method for manufacturing a recorded product having a three-dimensional image, a manufacturing apparatus for manufacturing a recorded product having a three-dimensional image, and a foaming promotion liquid that are capable of forming a three-dimensional image having a sufficient foaming height even in a case where the heating temperature at which a recording medium having a foaming layer is heated is low, and have arrived at the present disclosure.

With reference to the drawings, a description will be given below of a foaming promotion liquid according to a first aspect, a manufacturing method for manufacturing a recorded product having a three-dimensional image according to a second aspect, and a manufacturing apparatus for manufacturing a recorded product having a three-dimensional image according to a third aspect. The present disclosure, however, is not limited to the following exemplary embodiment.

### <Manufacturing Method for Manufacturing Recorded Product Having Three-Dimensional Image>

The manufacturing method for manufacturing a recorded product according to the second aspect includes the step of applying a foaming promotion liquid to a recording medium having a base material and a foaming layer provided on the base material and containing a foaming particle having a shell layer including polyacrylonitrile copolymer, and the step of heating the recording medium to which the foaming promotion liquid is applied, thereby forming a three-dimensional image.

The foaming promotion liquid according to the first aspect and also used in the manufacturing method for manufacturing a recorded product according to the second aspect and the manufacturing apparatus for manufacturing a recorded product according to the third aspect includes a good solvent for the polyacrylonitrile copolymer and a poor solvent for the polyacrylonitrile copolymer. The mass ratio between the amount of the good solvent contained in the foaming promotion liquid and the amount of the poor solvent contained in the foaming promotion liquid (the amount of the contained good solvent to the amount of the contained poor solvent) is 20:80 to 90:10.

The good solvent for the polyacrylonitrile copolymer refers to a solvent capable of dissolving the polyacrylonitrile copolymer (first solvent). On the other hand, the poor solvent for the polyacrylonitrile copolymer refers to a solvent incapable of dissolving the polyacrylonitrile (second solvent). In the specification, the good solvent for the polyacrylonitrile copolymer is a solvent in which the amount of the polyacrylonitrile copolymer dissolved in 1 L of the solvent is 1 g or more, and the poor solvent is a solvent in which the amount of the polyacrylonitrile copolymer dissolved in 1 L of the solvent is less than 1 g. The polyacrylonitrile copolymer is used to determine the good solvent and the poor solvent as follows. The foaming promotion liquid obtained by mixing the good solvent and the poor solvent for the polyacrylonitrile used in the shell layer of the foaming particle is applied to the recording medium having the foaming layer containing the foaming particle having the shell layer including the polyacrylonitrile copolymer. The good solvent functions to soften the polyacrylonitrile copolymer included in the shell layer of the foaming particle. If, however, a foaming promotion liquid having a high concentration of the good solvent is applied to the foaming layer of the recording medium, the shell layer of the foaming particle is excessively softened, and, as a result, when the recording medium is heated, a hole is likely to open in the shell layer of the foaming particle. Accordingly, the poor solvent that does not contribute to the softening of the polyacrylonitrile copolymer is contained in the foaming promotion liquid together with the good solvent. This can make a hole less likely to open in the shell layer of the foaming particle to which the foaming promotion liquid is applied while softening the shell layer.

Then, the softening of the shell layer lowers the foaming start temperature of the foaming particle. As a result, even in a case where the heating temperature at which a three-dimensional image is formed is lowered, it is possible to form a three-dimensional image having a sufficient foaming height.

The good solvent and the poor solvent for the polyacrylonitrile copolymer both have boiling points higher than the heating temperature at which the recording medium is heated to form a three-dimensional image. If the boiling points of the good solvent and the poor solvent are lower than the heating temperature at which the recording medium is heated, the good solvent and the poor solvent boil and intensely vaporize by heat. This results in decreasing the good solvent and the poor solvent contained in the foaming layer of the recording medium to which the foaming promotion liquid is applied, and it is difficult to control the softening of the shell layer of the foaming particle. That is, if the boiling point of the good solvent is lower than or equal to the heating temperature, the good solvent boils by heat, and it is difficult to soften the shell layer of the foaming particle. If the boiling point of the poor solvent is lower than or equal to the heating temperature, and the boiling point of the good solvent is higher than the heating temperature, the poor solvent boils by heat, and the concentration of the good solvent contained in the foaming promotion liquid increases. Thus, it is difficult to prevent a hole from opening in the shell layer of the foaming particle.

To deal with a high-speed printing system, it is desirable that the static surface tension of the foaming promotion liquid should be 24 mN/m or more and 40 mN/m or less. It is more desirable that the static surface tension of the foaming promotion liquid should be 24 mN/m or more and 36 mN/m or less. It is even more desirable that the static surface tension of the foaming promotion liquid should be 25 mN/m or more and 33 mN/m or less. The static surface tension of the foaming promotion liquid is controlled to be within this range, whereby it is possible to cause the foaming promotion liquid to quickly and substantially uniformly penetrate into the foaming layer. As a result, it is possible to cause the entirety of the foaming layer in a region to which the foaming promotion liquid is applied to foam by subsequent heating. Thus, it is possible to obtain a sufficient foaming height. If the static surface tension is less than 24 mN/m, the penetration of the foaming promotion liquid is too fast, and accordingly, it is not possible to cause the foaming promotion liquid to sufficiently contribute to foaming particles in an upper portion of the foaming layer, and it is difficult to obtain a sufficient foaming height even by subsequent heating.

If the static surface tension exceeds 40 mN/m, the penetration of the foaming promotion liquid is not sufficient, and therefore, it is not possible to cause the foaming promotion liquid to sufficiently contribute to foaming particles in a lower portion of the foaming layer, and it is difficult to obtain a sufficient foaming height even by subsequent heating. To cause the foaming promotion liquid to more effectively contribute to the entirety of the foaming layer from the application of the foaming promotion liquid to the heating of the recording medium, it is desirable that the dynamic surface tension of the foaming promotion liquid in 1000 ms should be 34 mN/m or less. It is more desirable that the dynamic surface tension of the foaming promotion liquid in 1000 ms should be 32 mN/m or less. The static surface tension of the foaming promotion liquid can be measured using an automatic surface tensiometer (e.g., product name "DY-300", manufactured by Kyowa Interface Science Co., Ltd.) under the condition of a temperature of 25°C. The dynamic surface tension of the foaming promotion liquid can be measured using a dynamic surface tensiometer by a maximum bubble pressure method (e.g., product name "bubble pressure tensiometer BP-2100", manufactured by KRUSS) under the condition of a temperature of 25°C. The maximum bubble pressure method is a method for measuring the maximum pressure required to release an air bubble generated at a tip of a probe (a narrow tube) immersed in a measurement target liquid and obtaining the surface tension of the liquid based on the measured maximum pressure. Specifically, the maximum pressure is measured while continuously generating an air bubble at the tip of the probe. The time from when the surface of a new air bubble is generated at the tip of the probe to when the maximum bubble pressure is reached (when the radius of curvature of the air bubble and the radius of the tip portion of the probe are equal to each other) is referred to as a "life time". That is, the maximum bubble pressure method is a method for measuring the surface tension of a liquid in the state where the liquid moves. In the present disclosure, the surface tension was measured in a life time of 1000 ms. The static surface tension and the dynamic surface tension of the foaming promotion liquid can be adjusted according to the types and the content of components such as a good solvent, a poor solvent, and a surfactant, in the foaming promotion liquid.

Moreover, in terms of improvement in the penetration of the foaming promotion liquid into the foaming layer of the recording medium, it is desirable that the viscosity of the foaming promotion liquid should be 1.5 mPa·s or more and 5.0 mPa·s or less. It is more desirable that the viscosity of the foaming promotion liquid should be 1.5 mPa·s or more and 2.7 mPa·s or less. By controlling the viscosity is to be within this range, it is possible to cause the foaming promotion liquid to effectively penetrate into the foaming layer by a sufficient amount, and cause the foaming promotion liquid to substantially uniformly function in the entirety of the foaming layer. Then, it is possible to cause the entirety of the foaming layer to foam by subsequent heating. Thus, it is possible to obtain a sufficient foaming height. The viscosity of the foaming promotion liquid can be measured using an E-type viscometer (product name "RE-80L", manufactured by TOKI) under the condition of a temperature of 25°C. The viscosity of the foaming promotion liquid can be adjusted according to the types and the content of components such as a good solvent, a poor solvent, and a surfactant, in the foaming promotion liquid.

The proportion of the amount of the good solvent applied to the foaming promotion liquid to the amount of the foaming particles contained per unit area in the foaming layer is 80% by mass or less. If this proportion is greater than 80% by mass, a hole is likely to open in the shell layer of the foaming particle. Although the lower limit value of the proportion of the amount of the good solvent applied to the foaming promotion liquid to the amount of the foaming particles contained per unit area in the foaming layer is not particularly limited, it is desirable that the proportion should be 5% by mass or more.

In the step of heating the recording medium, when a thickness of the foaming layer is d µm, it is desirable that the recording medium to which the foaming promotion liquid is applied should be heated (d/10) seconds after the foaming promotion liquid is applied to the recording medium. Consequently, it is possible to cause the foaming promotion liquid to uniformly penetrate into the foaming layer. Although the upper limit of the time from the application of the foaming promotion liquid to the heating of the recording medium is not particularly limited, it is desirable that the time should be (2d) seconds or less in a case where high-speed printing is performed.

In the present exemplary embodiment, it is possible to lower the foaming start temperature of the foaming particle to which the foaming promotion liquid is applied. When a three-dimensional image is formed, the foaming promotion liquid is applied to a portion that should foam, and then, the recording medium is heated at a heating temperature lower than the foaming start temperature of the foaming particle. In this manner, only the portion to which the foaming promotion liquid is applied foams, and on the other hand, a portion to which the foaming promotion liquid is not applied is heated at the temperature less than the foaming start temperature, and therefore does not foam. If the heating temperature at which the three-dimensional image is formed is higher than the foaming start temperature of the foaming particle, the portion to which the foaming promotion liquid is not applied may also expand.

The foaming start temperature of the foaming particle to which the foaming promotion liquid is applied can be measured by the following method. First, to bring the foaming particle into the state where the foaming promotion liquid is applied to the foaming particle, the foaming particle is immersed in the foaming promotion liquid for 10 seconds. 25 µg of foaming particles immersed in the foaming promotion liquid is placed as a sample in an aluminum container having a diameter of 7 mm and a depth of 1 mm. In the state where the aluminum container is attached to a thermo-mechanical analysis apparatus and a load of 0.1 N is applied onto the foaming particles, the foaming particles are heated from 60°C to 200°C at a temperature rising speed of 5°C/min, and the amount of displacement of a measurement terminal in the vertical direction (the amount of displacement of the height of a portion occupied by the sample) is measured.

Then, the temperature at the time when the displacement starts is determined as the foaming start temperature of the foaming particle to which the foaming promotion liquid is applied.

The foaming start temperature of the foaming particle in which the foaming promotion liquid is not applied means the following temperature. That is, the foaming start temperature of the foaming particle in which the foaming promotion liquid is not applied means each of the temperature at the time when the displacement starts and the temperature at the time when the amount of displacement reaches the maximum amount that are measured by a method similar to that in the above case of the foaming particle in which the foaming promotion liquid is applied, except that the foaming particle in which the foaming promotion component is not applied is used as a sample.

The method for heating the foaming layer to which the foaming promotion liquid is applied only needs to be a method using a heating device capable of heating the foaming particle in the foaming layer to a desired temperature.

Before and after the foaming promotion liquid is applied to the foaming layer, or before and after the foaming layer to which the foaming promotion liquid is applied is heated, any image may be recorded (printed) by applying ink containing a dye or a pigment as a color material to the recording medium. It is desirable to use aqueous ink as the ink. The printing may be performed not only by an inkjet recording method for applying ink in an inkjet manner, but also by a printing method such as an electrophotographic manner that uses toner, latex, ultraviolet (UV), or sublimation transfer. It is desirable to record the image by the inkjet recording method among these methods because a finer image can be recorded.

### (Recording Medium)

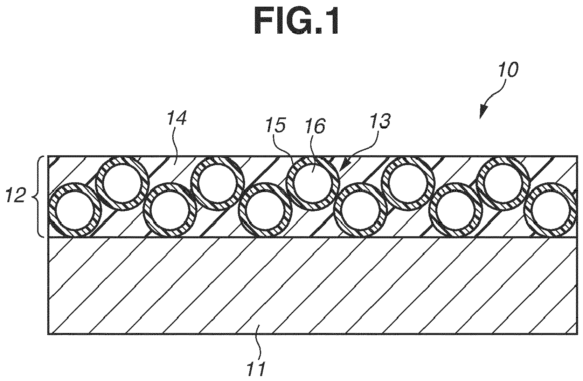

Fig. 1 is a cross-sectional view schematically illustrating an example of the recording medium used in the manufacturing method for manufacturing a recorded product having a three-dimensional image according to the present exemplary embodiment. As illustrated in Fig. 1, a recording medium 10 has a base material 11 and a foaming layer 12 provided on the base material 11 and containing a foaming particle 13 that foams by heat. The details of the recording medium used in the manufacturing method for manufacturing a recorded product according to the present exemplary embodiment will be described below.

### [Base Material]

The base material 11 functions as a supporting member that supports the foaming layer 12. The type of the base material 11 is not particularly limited. Examples of the base material 11 can include paper composed of normal natural pulp; Kenaf paper; plastic film sheets of polypropylene, polyethylene, and polyester; and synthetic paper and non-woven fabric obtained by simulating paper using synthetic fibers, synthetic pulp, and synthetic resin films.

### [Foaming Layer]

As illustrated in Fig. 1, the foaming layer 12 is a layer provided on at least one of the surfaces of the base material 11 and containing the foaming particle 13 and a binder resin 14. The foaming particle 13 is a thermally expandable microcapsule having a capsular shell layer 15 containing a thermoplastic resin and a volatile material 16 enclosed within the shell layer 15. If heat is applied to the foaming particle 13, the thermoplastic resin contained in the shell layer 15 softens, and the volatile material 16 enclosed within the shell layer 15 vaporizes and expands in volume. As a result, the foaming particle 13 expands like a balloon.

The shell layer 15 may include a thermoplastic resin other than polyacrylonitrile copolymer.

Examples of the thermoplastic resin other than the polyacrylonitrile copolymer contained in the shell layer 15 can include polystyrene, styrene-acrylic acid ester copolymer, a polyamide resin, polyacrylic acid ester, polyvinylidene chloride, polymethylmethacrylate, vinylidene chloride-acrylonitrile, methacrylic acid ester-acrylic acid copolymer, vinylidene chloride-acrylic acid copolymer, and vinylidene chloride-acrylic acid ester copolymer.

Examples of the volatile material 16 can include low-molecular-weight hydrocarbons such as ethane, ethylene, propane, propylene, n-butane, isobutane, n-pentane, isopentane, neopentane, n-hexane, heptane, and petroleum ether; chlorofluorocarbons such as CCl₃F, CCl₂F₂, CClF₃, and CClF₂-CClF₂; and tetraalkylsilanes such as tetramethylsilane, trimethylethylsilane, trimethylisopropylsilane, and trimethyl-n-propylsilane. It is desirable that the volatile material 16 should be a hydrocarbon having a molecular mass of 120 or less among these. Although the lower limit of the molecular mass of the volatile material 16 (the hydrocarbon) is not particularly limited, it is desirable that the molecular mass of the volatile material 16 should be 50 or more, for example. It is desirable that the amount of foaming particles contained in the foaming layer 12 should be 5% by mass or more and 95% by mass or less with respect to the entire mass of the foaming layer 12.

The foaming layer 12 contains the binder resin 14 to increase the adhesiveness between the foaming layer 12 and the base material 11. The binder resin 14 serves an important role in preventing the foaming layer 12 from peeling off the base material 11 when the foaming particle 13 in the foaming layer 12 foams by heat. Although the binder resin 14 is not particularly limited, it is desirable that the binder resin 14 should contain a water-insoluble resin. It is desirable that the water-insoluble resin should be at least one selected from the group including an acrylic resin and a urethane resin. It is more desirable that the water-insoluble resin should be at least one selected from the group including an acrylic resin that does not have an ester group and a urethane resin that does not have an ester group. It is desirable that the amount of the water-insoluble resin contained in the foaming layer 12 should be 10% by mass or more and 95% by mass or less with respect to the entire mass of the foaming layer 12. The foaming layer 12 may also contain a water-soluble resin together with the water-insoluble resin in the range where the effect of the present disclosure can be obtained. It is desirable that the glass-transition point of the binder resin 14 should be -10°C or more and 30°C or less. The glass-transition point of the binder resin 14 is within the above range, whereby it is possible to prevent the binder resin 14 from hindering the foaming of the foaming particle 13.

It is desirable that the mass ratio between the foaming particle 13 and the binder resin 14 should be 5:95 to 90:10. By keeping the mass ratio between the foaming particle 13 and the binder resin 14 is within the above range, it is possible to improve both the foaming property of the foaming particle 13 and the binding property of the binder resin 14 to the base material 11. The foaming layer 12 can further contain components such as a pigment, an antioxidant, a dye, and a surfactant in the range where the foaming property is not impaired.

To obtain a sufficient foaming height, it is desirable that a thickness of d µm of the foaming layer 12 should be 10 µm or more. It is more desirable that the thickness of d µm of the foaming layer 12 should be 20 µm or more. It is even more desirable that the thickness of d µm of the foaming layer 12 should be 25 µm or more. Although the upper limit of the thickness of d µm of the foaming layer 12 is not particularly limited, the thickness of d µm of the foaming layer 12 can be 100 µm or less, for example.

The recording medium 10 may further include an ink absorbing layer.

### (Manufacturing Method for Manufacturing Recording Medium)

To manufacture a recording medium, first, a coated layer is formed by coating the surface of a base material with a coating liquid for a foaming layer containing a foaming particle. Next, the foaming layer is formed by drying the formed coated layer, whereby it is possible to obtain the recording medium. To coat the surface of the base material with the coating liquid for the foaming layer, a conventionally known coater such as an air knife coater, a die coater, a blade coater, a gate roll coater, a bar coater, a rod coater, a roll coater, a gravure coater, or a curtain coater can be used. Examples of the method for drying the coated layer can include a method in which hot air is blown against the coated layer. The drying conditions (the temperature, the airflow volume, and the time) may be appropriately set according to the type of the base material and the composition of the coating liquid. The temperature at which the coated layer is dried, however, needs to be lower than the foaming start temperature of the foaming particle that is used.

By providing the foaming layer having an area of 2 g/m² or more, it is possible to further improve the foaming property. Alternatively, a recording medium in which a foaming layer containing a foaming particle is provided in advance may be used.

On the surface on the opposite side of the surface on which the foaming layer is provided, a back coating layer may be provided. The back coating layer may be the same layer as the foaming layer containing the foaming particle, or may be a layer other than the foaming layer. A viscous layer containing a viscous resin such as an acrylic resin or an ink absorbing layer for fixing a color material may also be formed.

### <Foaming Promotion Liquid>

The details of the foaming promotion liquid according to the first aspect will be described below.

The foaming promotion liquid according to the first aspect includes a good solvent for polyacrylonitrile copolymer in a shell layer of a foaming particle and a poor solvent for the polyacrylonitrile copolymer, the good solvent and the poor solvent for the polyacrylonitrile copolymer both have boiling points higher than the heating temperature. The good solvent for polyacrylonitrile copolymer can promote the foaming of the foaming particle, so it can be called a foaming promotion component.

It is desirable that the good solvent for the polyacrylonitrile copolymer should be at least one selected from the group including dimethyl sulfoxide, N,N-dimethylformamide, dimethylacetamide, and N-methylpyrrolidone.

It is desirable that the poor solvent for the polyacrylonitrile copolymer should be at least one selected from the group including water, toluene, and isobutyl alcohol. It is more desirable that the poor solvent for the polyacrylonitrile copolymer should be water.

It is desirable that the boiling points of the good solvent and the poor solvent should be 100°C or more. It is more desirable that the boiling points of the good solvent and the poor solvent should be 110°C or more.

The foaming promotion liquid may further contain another component other than the solvents such as the good solvent and the poor solvent. For example, to improve the discharge stability of the foaming promotion liquid, it is desirable that the foaming promotion liquid should further contain a liquid component such as a solvent. As the solvent, water and various water-soluble organic solvents can be used. Particularly, it is desirable that the foaming promotion liquid should contain water. By using a foaming promotion liquid containing water (i.e., an aqueous foaming promotion liquid), it is possible to obtain a sufficient foaming height in a short time. It is desirable to use deionized water (ion-exchanged water) as the water. Examples of the water-soluble organic solvents can include alcohols, glycols, glycol ethers, and nitrogen-containing compounds.

Further, the foaming promotion liquid may contain various additives such as a pH adjuster, an antifoam agent, an antirust agent, an antiseptic agent, a fungicide, an antioxidant, an antireductant, and a chelator, where necessary. It is desirable that the amount of the good solvent for the polyacrylonitrile copolymer contained in the foaming promotion liquid should be 20% by mass or more and 90% by mass or less with respect to the entire mass of the foaming promotion liquid. The amount of the contained good solvent is 20% by mass or more, whereby it is possible to sufficiently soften the shell layer of the foaming particle, and it is easy to lower the foaming start temperature of the foaming particle. On the other hand, the amount of the contained good solvent is 90% by mass or less, whereby it is easy to prevent a hole from opening in the shell layer of the foaming particle. It is desirable that the amount of the good solvent contained in the polyacrylonitrile should be 31% by mass or more and 70% by mass or less with respect to the entire mass of the foaming promotion liquid.

### <Manufacturing Apparatus for Manufacturing Recorded Product Having Three-Dimensional Image>

The manufacturing apparatus for manufacturing a recorded product having a three-dimensional image according to the third aspect includes a foaming promotion liquid application device that applies a foaming promotion liquid to a recording medium having a base material and a foaming layer provided on the base material and containing a foaming particle having a shell layer including polyacrylonitrile copolymer, and a heating device that heats the recording medium to which the foaming promotion liquid is applied, thereby forming a three-dimensional image. The ink, the foaming promotion liquid, and the recording medium used in the manufacturing apparatus for manufacturing a recorded product are similar to the ink, the foaming promotion liquid, and the recording medium used in the manufacturing method for manufacturing a recorded product according to the second aspect. The manufacturing apparatus for manufacturing a recorded product can suitably use the manufacturing method for manufacturing a recorded product according to the second aspect.

The manufacturing apparatus for manufacturing a recorded product can also include an ink storage portion that stores ink, and an ink application unit that discharges the ink from an inkjet recording head and records an image on the recording medium. The manufacturing apparatus for manufacturing a recorded product can also include a foaming promotion liquid storage portion that stores the foaming promotion liquid. Further, the manufacturing apparatus for manufacturing a recorded product can also include a conveying unit that conveys the recording medium.

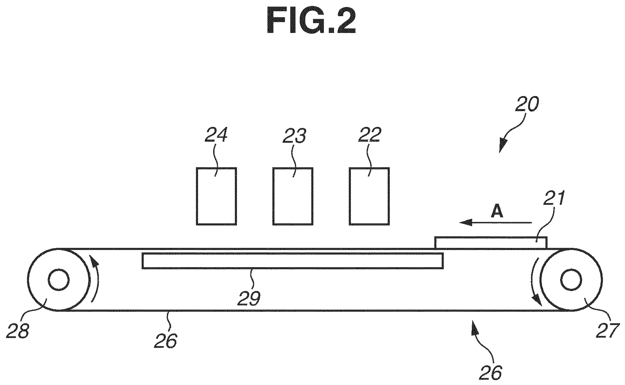

Fig. 2 is a schematic diagram illustrating the general configuration of the manufacturing apparatus for manufacturing a recorded product having a three-dimensional image according to the present exemplary embodiment.

A manufacturing apparatus 20 for manufacturing a recorded product includes a foaming promotion liquid application device 22, a heating device 23, an ink application device 24, and a conveying device 25.

A recording medium 21 is conveyed in the direction of an arrow A in Fig. 2 by the conveying device 25 as a conveying unit that conveys the recording medium 21. The conveying device 25 includes a conveying belt 26 that is an endless belt, and two rollers 27 and 28 that hold the conveying belt 26. The rollers 27 and 28 are rotationally driven, whereby the recording medium 21 is conveyed in the direction of the arrow A. The conveying device 25 may also include a platen 29 that restricts the displacement of the conveying belt 26 in the up-down direction.

The foaming promotion liquid application device 22 as a foaming promotion liquid application unit includes an inkjet recording head that discharges a foaming promotion liquid, and discharges the foaming promotion liquid from the inkjet recording head to the recording medium 21 conveyed by the conveying device 25.

The heating device 23 as a heating unit heats a foaming layer of the recording medium 21 to which the foaming promotion liquid is applied. The heating device 23 only needs to be a heating device capable of heating a foaming particle in the foaming layer to a desired temperature. Examples of the heating device 23 can include a dryer, an oven, a heating heater, and an iron.

It is desirable that when a thickness of the foaming layer is d µm, the heating device 23 heats the recording medium to which the foaming promotion liquid is applied (d/10) seconds after the foaming promotion liquid is applied to the recording medium.

The ink application device 24 as an ink application unit includes an inkjet recording head that discharges ink, and applies the ink from the inkjet recording head to the recording medium 21 that has foamed by the heating device 23. The ink application device 24 may be placed either upstream or downstream of the foaming promotion liquid application device 22 in the direction A as the conveying direction of the recording medium 21, and may be placed either upstream or downstream of the heating device 23. Fig. 2 illustrates a configuration in a case where the ink application device 24 is placed downstream of the foaming promotion liquid application device 22 and downstream of the heating device 23 in the conveying direction of the recording medium 21 (the direction A).

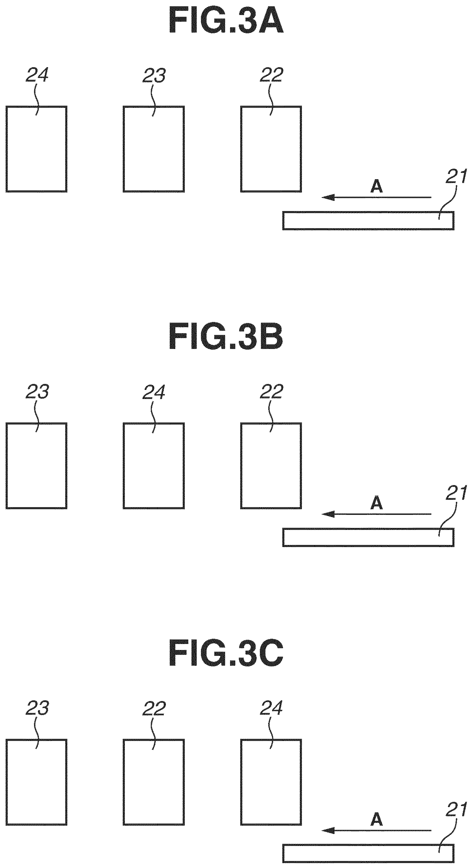

Figs. 3A, 3B, and 3C illustrate the placement of the foaming promotion liquid application device 22, the heating device 23, and the ink application device 24 in the conveying direction of the recording medium 21.

Fig. 3A illustrates a configuration in a case where the ink application device 24 is placed downstream of the foaming promotion liquid application device 22 and downstream of the heating device 23 in the conveying direction A of the recording medium 21. Fig. 3B illustrates a configuration in a case where the ink application device 24 is placed downstream of the foaming promotion liquid application device 22 and upstream of the heating device 23 in the conveying direction A of the recording medium 21. Fig. 3C illustrates a configuration in a case where the ink application device 24 is placed upstream of the foaming promotion liquid application device 22 and upstream of the heating device 23 in the conveying direction A of the recording medium 21. According to the first to third aspects of the present disclosure, it is possible to provide a manufacturing method for manufacturing a recorded product having a three-dimensional image, a manufacturing apparatus for manufacturing a recorded product having a three-dimensional image, and a foaming promotion liquid that are capable of forming a three-dimensional image having a sufficient foaming height even in a case where the heating temperature at which a recording medium having a foaming layer is heated is low.

### [Examples]

The present disclosure is described in further detail below taking examples and comparative examples. The present disclosure, however, is not limited to the following examples so long as the present disclosure does not depart from the scope of the present disclosure. Component amounts described as "parts" and "%" are based on mass, unless otherwise noted.

### <Production of Foaming Particle>

As illustrated in table 1, foaming particles H1 to H3 having a shell layer including polyacrylonitrile copolymer were prepared. The foaming start temperature of each foaming particle was measured according to the above measuring method.

**[Table 1]**

| Foaming particle | Product name | Foaming start temperature |
|---|---|---|
| H1 | HF-50 (manufactured by Matsumoto Yushi-Seiyaku Co., Ltd.) | 95°C |
| H2 | EMH 204 (manufactured by Sekisui Chemical Company, Limited) | 110°C |
| H3 | Expancel 007-40 (manufactured by Japan Fillite Co., Ltd.) | 91°C |

### <Production of Recording Medium>

### (Recording Medium M1)

As a base material, polypropylene synthetic paper (product name "New Yupo FGS110", manufactured by Yupo Corporation) was prepared. 100 parts of acrylic resin "Mowinyl 6950" (acrylic resin manufactured by Japan Coating Resin Co., Ltd.) having a glass-transition point of 0°C and 50 parts of the foaming particle H1-1 were added to ion-exchanged water, and the resulting product was sufficiently agitated, thereby obtaining a coating liquid 1 having a solid content concentration of 43%.

The base material was coated with the obtained coating liquid 1 so that the amount of the applied coating liquid 1 was 40 g/m², and then, a foaming layer was formed by drying the coating liquid 1 for 5 minutes in an oven at 80°C, thereby obtaining a recording medium M1-1. The amount of foaming particles contained per unit area was 13.3 g/m². A thickness of the foaming layer was 40 µm.

### (Recording Media M2 and M3)

Recording media M2 and M3 were manufactured and obtained by a method similar to that for the recording medium M1, except that the foaming particle H1 was changed to the foaming particles H2 and H3, respectively. The amount of foaming particles contained per unit area was 13.3 g/m². A thickness of the foaming layer was 40 µm.

### <Production of Foaming Promotion Liquid>

### (Foaming Promotion Liquid L1)

35 parts of dimethyl sulfoxide (boiling point: 189°C) as a good solvent for polyacrylonitrile copolymer, 64.5 parts of ion-exchanged water as a poor solvent for polyacrylonitrile copolymer, and 0.5 parts of a non-ionic surfactant (product name "Acetylenol E60", manufactured by Kawaken Fine Chemicals Co., Ltd.) as a surfactant were mixed together. The resulting product was sufficiently agitated and then subjected to pressure filtration through a filter having a pore size of 1.2 µm, thereby obtaining a foaming promotion liquid L1.

### (Foaming Promotion Liquid L2)

A foaming promotion liquid L2 was produced by a method similar to that for the foaming promotion liquid L1, except that 60 parts of dimethyl sulfoxide and 39.5 parts of toluene (boiling point: 111°C) were used.

### (Foaming Promotion Liquid L3)

A foaming promotion liquid L3 was produced by a method similar to that for the foaming promotion liquid L1, except that isobutyl alcohol (boiling point: 108°C) was used instead of the ion-exchanged water.

### (Foaming Promotion Liquid L4)

A foaming promotion liquid L4 was produced by a method similar to that for the foaming promotion liquid L1, except that N,N-dimethylformamide (boiling point: 153°C) was used instead of the dimethyl sulfoxide.

### (Foaming Promotion Liquid L5)

A foaming promotion liquid L5 was produced by a method similar to that for the foaming promotion liquid L1, except that dimethylacetamide (boiling point: 165°C) was used instead of the dimethyl sulfoxide.

### (Foaming Promotion Liquid L6)

A foaming promotion liquid L6 was produced by a method similar to that for the foaming promotion liquid L1, except that N-methylpyrrolidone (boiling point: 202°C) was used instead of the dimethyl sulfoxide.

### (Foaming Promotion Liquid L7)

A foaming promotion liquid L7 was produced by a method similar to that for the foaming promotion liquid L1, except that 20 parts of the dimethyl sulfoxide and 79.5 parts of the ion-exchanged water were used.

### (Foaming Promotion Liquid L8)

A foaming promotion liquid L8 was produced by a method similar to that for the foaming promotion liquid L2, except that 90 parts of the dimethyl sulfoxide and 9.5 parts of the toluene were used.

### (Foaming Promotion Liquid L9)

A foaming promotion liquid L9 was produced by a method similar to that for the foaming promotion liquid L1, except that isopropyl alcohol (boiling point: 82°C) was used instead of the ion-exchanged water.

### (Foaming Promotion Liquid L10)

A foaming promotion liquid L10 was produced by a method similar to that for the foaming promotion liquid L1, except that 18 parts of the dimethyl sulfoxide and 81.5 parts of the ion-exchanged water were used.

### (Foaming Promotion Liquid L11)

A foaming promotion liquid L11 was produced by a method similar to that for the foaming promotion liquid L2, except that 92 parts of the dimethyl sulfoxide and 7.5 parts of the toluene were used.

### (Foaming Promotion Liquid L12)

A foaming promotion liquid L12 was produced by a method similar to that for the foaming promotion liquid L1, except that "Acetylenol E100" (manufactured by Kawaken Fine Chemicals Co., Ltd.) was used instead of the "Acetylenol E60".

### (Foaming Promotion Liquid L13)

A foaming promotion liquid L13 was produced by a method similar to that for the foaming promotion liquid L2, except that 88 parts of the dimethyl sulfoxide and 11.5 parts of the toluene were used.

### (Foaming Promotion Liquid L14)

A foaming promotion liquid L14 was produced by a method similar to that for the foaming promotion liquid L1, except that 64.65 parts of the ion-exchanged water was used and 0.35 parts of "BYK-349" (manufactured by BYK JAPAN KK) was used instead of the "Acetylenol E60".

### (Foaming Promotion Liquid L15)

A foaming promotion liquid L15 was produced by a method similar to that for the foaming promotion liquid L1, except that 60 parts of the dimethyl sulfoxide and 39.5 parts of the ion-exchanged water were used.

The viscosity of each foaming promotion liquid was measured using an E-type viscometer (product name "RE-80L", manufactured by TOKI). The static surface tension of the foaming promotion liquid was measured using an automatic surface tensiometer (product name "DY-300", manufactured by Kyowa Interface Science Co., Ltd.). The dynamic surface tension of the foaming promotion liquid in 1000 ms was measured using a dynamic surface tensiometer by a maximum bubble pressure method (product name "bubble pressure tensiometer BP-2100", manufactured by KRUSS).

The static surface tension of the foaming promotion liquid was measured using the automatic surface tensiometer (product name "DY-300", manufactured by Kyowa Interface Science Co., Ltd.) under the condition of a temperature of 25°C.

The dynamic surface tension of the foaming promotion liquid was measured using the dynamic surface tensiometer by the maximum bubble pressure method (product name "bubble pressure tensiometer BP-2100", manufactured by KRUSS) under the condition of a temperature of 25°C. In the present example, the dynamic surface tension in a life time of 1000 ms was measured.

Table 2 illustrates the viscosity, the static surface tension, and the dynamic surface tension of each of the foaming promotion liquids L1 to L15.

**[Table 2]**

| Foaming promotion liquid | Viscosity (mPa·s) | Static surface tension (mN/m) | Dynamic surface tension (mN/m) |
|---|---|---|---|
| L1 | 2.0 | 28.0 | 29.0 |
| L2 | 1.4 | 35.0 | 28.0 |
| L3 | 2.7 | 25.0 | 27.0 |
| L4 | 1.9 | 36.0 | 34.0 |
| L5 | 1.5 | 28.0 | 28.0 |
| L6 | 1.5 | 28.0 | 29.5 |
| L7 | 1.6 | 28.0 | 29.5 |
| L8 | 1.7 | 39.7 | 35.0 |
| L9 | 1.5 | 23.9 | 24.0 |
| L10 | 1.6 | 27.0 | 29.5 |
| L11 | 1.7 | 42.0 | 37.0 |
| L12 | 2.0 | 33.0 | 31.0 |
| L13 | 1.7 | 37.0 | 37.0 |
| L14 | 2.0 | 24.0 | 39.0 |
| L15 | 2.8 | 31.0 | 31.0 |

### <Examples 1 to 14, Comparative Examples 1 to 4>

### <Formation of Three-Dimensional Image (Manufacturing of Recorded Product)>

Using the manufacturing apparatus for manufacturing a recorded product illustrated in Fig. 2, the foaming promotion liquid L1 was applied by 12 g/m² onto the foaming layer of the recording medium M1 heated in advance so that the paper surface temperature was 30°C. The resulting product was heated for 10 seconds by 90°C of hot air five seconds after the foaming promotion liquid was applied, thereby obtaining a recorded product 1. Regarding the amount of the good solvent applied to the foaming promotion liquid L1, the proportion of the amount of the good solvent applied to the recording medium M1 to the amount of the foaming particles contained per unit area in the foaming layer of the recording medium M1 was 32% by mass.

In examples 2 to 14 and comparative examples 1 to 4, recorded products 2 to 18 were obtained by methods similar to that in example 1, except that these methods were performed based on the types of the foaming promotion liquid and the recording medium, the amount of the foaming promotion liquid applied to the recording medium, the proportion of the amount of the applied good solvent to the amount of the contained foaming particles, time from application of foaming promotion liquid to heating, and the heating temperature that are illustrated in table 3.

"Proportion of amount of applied good solvent to amount of contained foaming particles (% by mass)" illustrated in table 3 means "the proportion of the amount of the good solvent applied to the recording medium to the amount of the foaming particles contained per unit area in the foaming layer".

### <Evaluation>

Using a digital micrometer (product name "M-30", manufactured by Sony), the height of a foaming portion (the foaming height) based on the height of a non-foaming portion on the surface of each of the obtained recorded products 1 to 15 was measured.

Table 3 illustrates the measurement results.
A: the difference between a recess and a protrusion is 200 µm or more
B: the difference between a recess and a protrusion is 100 µm or more and less than 200 µm
C: the difference between a recess and a protrusion is less than 100 µm

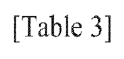

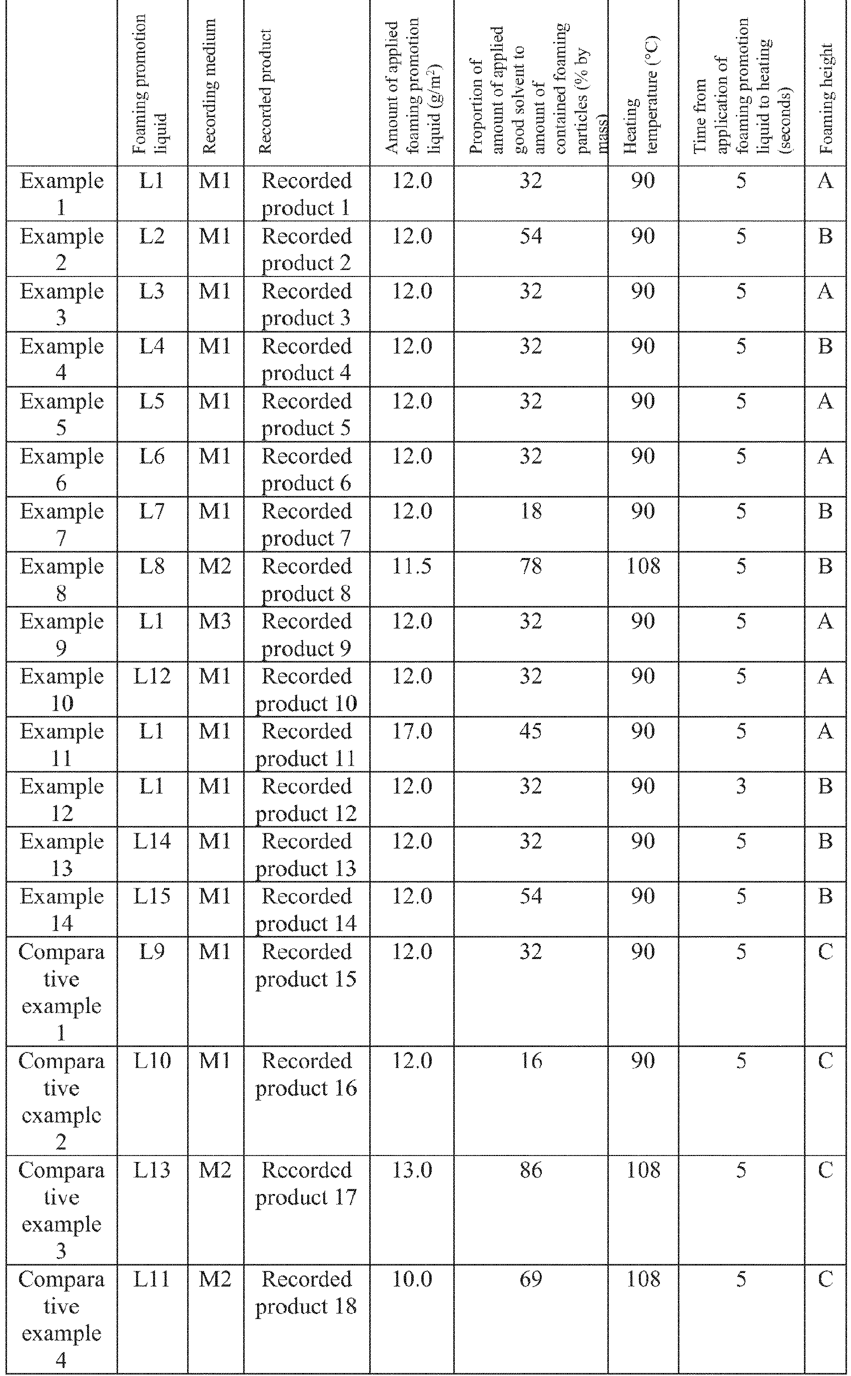

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. A foaming promotion liquid for forming a three-dimensional image, the foaming promotion liquid including a good solvent for polyacrylonitrile copolymer and a poor solvent for the polyacrylonitrile copolymer,
wherein a mass ratio of an amount of the good solvent contained in the foaming promotion liquid to an amount of the poor solvent contained in the foaming promotion liquid is 20:80 to 90:10, and
wherein the good solvent and the poor solvent both have boiling points higher than a heating temperature at which a recording medium is heated to form a three-dimensional image.

2. The foaming promotion liquid according to claim 1, wherein the good solvent is at least one member selected from the group including dimethyl sulfoxide, N,N-dimethylformamide, dimethylacetamide, and N-methylpyrrolidone.

3. The foaming promotion liquid according to claim 1 or 2, wherein the poor solvent is at least one selected from the group including water, toluene, and isobutyl alcohol.

4. The foaming promotion liquid according to any one of claims 1 to 3, wherein the poor solvent is water.

5. The foaming promotion liquid according to any one of claims 1 to 4, wherein a static surface tension of the foaming promotion liquid is 24 mN/m or more and 40 mN/m or less.

6. The foaming promotion liquid according to any one of claims 1 to 5, wherein a static surface tension of the foaming promotion liquid is 25 mN/m or more and 33 mN/m or less.

7. The foaming promotion liquid according to any one of claims 1 to 6, wherein a dynamic surface tension of the foaming promotion liquid is 34 mN/m or less.

8. The foaming promotion liquid according to any one of claims 1 to 7, wherein a viscosity of the foaming promotion liquid is 1.5 mPa-s or more and 2.7 mPa - s or less.

9. The foaming promotion liquid according to any one of claims 1 to 8, wherein an amount of the good solvent contained in the foaming promotion liquid is 20% by mass or more and 90% by mass or less with respect to an entire mass of the foaming promotion liquid.

10. A manufacturing method for manufacturing a recorded product having a three-dimensional image, the manufacturing method comprising:
applying a foaming promotion liquid to a recording medium having a base material and a foaming layer provided on the base material and containing a foaming particle having a shell layer including polyacrylonitrile copolymer; and
heating the recording medium to which the foaming promotion liquid is applied, thereby forming a three-dimensional image,
wherein the foaming promotion liquid includes a good solvent for the polyacrylonitrile copolymer and a poor solvent for the polyacrylonitrile copolymer,
wherein a mass ratio of an amount of the good solvent contained in the foaming promotion liquid to an amount of the poor solvent contained in the foaming promotion liquid is 20:80 to 90:10,
wherein the good solvent and the poor solvent both have boiling points higher than a heating temperature at which the recording medium is heated, and
wherein a proportion of an amount of the good solvent applied to the recording medium to an amount of the foaming particles contained per unit area in the foaming layer is 80% by mass or less.

11. The manufacturing method for manufacturing a recorded product having a three-dimensional image according to claim 10 or 11, wherein the heating temperature is lower than a foaming start temperature of the foaming particle.

12. The manufacturing method for manufacturing a recorded product having a three-dimensional image according to claim 10 or 11, wherein in the step of heating the recording medium, when a thickness of the foaming layer is d µm, the recording medium to which the foaming promotion liquid is applied is heated (d/10) seconds after the foaming promotion liquid is applied to the recording medium.

13. A manufacturing apparatus for manufacturing a recorded product having a three-dimensional image, the manufacturing apparatus comprising:
a foaming promotion liquid application device configured to apply a foaming promotion liquid to a recording medium having a base material and a foaming layer provided on the base material and containing a foaming particle having a shell layer including polyacrylonitrile copolymer; and
a heating device configured to heat the recording medium to which the foaming promotion liquid is applied, thereby forming a three-dimensional image,
wherein the foaming promotion liquid includes a good solvent for the polyacrylonitrile copolymer and a poor solvent for the polyacrylonitrile copolymer,
wherein a mass ratio of an amount of the good solvent contained in the foaming promotion liquid to an amount of the poor solvent contained in the foaming promotion liquid is 20:80 to 90:10,
wherein the good solvent and the poor solvent both have boiling points higher than a heating temperature at which the recording medium is heated, and
wherein a proportion of an amount of the good solvent applied to the recording medium to an amount of the foaming particles contained per unit area in the foaming layer is 80% by mass or less.

14. The manufacturing apparatus for manufacturing a recorded product having a three-dimensional image according to claim 13, wherein the heating device controls the heating temperature to be a temperature lower than a foaming start temperature of the foaming particle.

15. The manufacturing apparatus for manufacturing a recorded product having a three-dimensional image according to claim 13 or 14, wherein when a thickness of the foaming layer is d µm, the heating device heats the recording medium to which the foaming promotion liquid is applied (d/10) seconds after the foaming promotion liquid is applied to the recording medium.
